# EUROPEAN PATENT APPLICATION

(11) **EP 2 797 200 A1**
(43) Date of publication of application: **29.10.2014**
(21) Application number: 13164755.4
(22) Date of filing: 22.04.2013
(51) Int. Cl.: H02J 7/00, G06F 1/28, G11C 5/14, H01M 2/10, H01R 13/641

(54) **Apparatus with removable battery**

(71) Applicant: Sanofi-Aventis Deutschland GmbH, 65929 Frankfurt am Main (DE)
(72) Inventor: Allerdings, Alexander, 65926 Frankfurt am Main (DE); Prager, Roman, 2230 Gänserndorf (AT)

(57) **Abstract**

Apparatus comprises first and second terminals for connection to a battery; an energy storage device; and a controller. The controller is operable in a first mode in which at least one energy consuming function and a real time clock are active and being operable in a battery removal mode in which the real time clock is active and is powered by energy stored in the energy storage device and in which the at least one energy consuming function is inactive. The apparatus is configured to detect movement of a battery from a first position at which it is fully in place in the apparatus and at which both the first and second terminals are in connection with terminals of the battery to a second position at which the battery is partly removed from the apparatus but at which the first and second terminals remain in connection with the terminals of the battery. The controller is responsive to the detection that the battery has moved from the first position to the second position by transitioning from the first mode to the battery removal mode.

## Description

### Field of the Invention

This invention relates to apparatus with a removable battery, and to a method of operating the same.

### Background to the Invention

It is well-known to provide apparatuses with batteries, and the benefits of the resulting portability are well-understood.

It has been proposed in WO 2011/117212 to provide a supplemental or clip-on device for attachment to an injection device, such as Sanofi's SoloStar ™ insulin injection pen. Such a supplemental device is battery-powered.

### Summary of the Invention

A first aspect of the invention provides apparatus comprising:
first and second terminals for connection to a battery;
an energy storage device; and
a controller, the controller being operable in a first mode in which a real time clock is active and being operable in a battery removal mode in which the real time clock is active and is powered by energy stored in the energy storage device,
   wherein the apparatus is configured to detect movement of a battery from a first position at which it is fully in place in the apparatus and at which both the first and second terminals are in connection with terminals of the battery to a second position at which the battery is partly removed from the apparatus but at which the first and second terminals remain in connection with the terminals of the battery, and wherein the controller is responsive to the detection that the battery has moved from the first position to the second position by transitioning from the first mode to the battery removal mode.

Such an apparatus can be advantageous in that the real time clock function of the controller can be preserved and continue to be powered whilst the battery is removed, however this can be achieved with a smaller capacity energy storage device (e.g. capacitor) and/or with less hardware than is possible with prior art arrangements.

In the first mode at least one energy consuming function and the real time clock may be active and in the battery removal mode the real time clock may be active and powered by energy stored in the energy storage device and the at least one energy consuming function may be inactive. Inactivating the energy consuming function when entering the battery removal mode may further assist in maintaining the real time clock function of the controller with a relatively low capacity energy storage device.

The apparatus may comprise a third terminal for connection to a terminal of the battery, and the apparatus may be configured such that the third terminal ceases to contact the terminal of the battery prior to the first and second terminals ceasing to contact the battery as the battery is moved from the first position to be removed from the apparatus. Here, the apparatus may be configured to cause the third terminal to be connected to a positive terminal of the battery when the battery is in the first position. Alternatively, the apparatus may be configured to cause the third terminal to be connected to a negative terminal of the battery when the battery is in the first position. These arrangements can be advantageous in that with relatively little hardware the removal of the battery can be detected at a relatively late stage of battery removal (this may be a long time after the battery cover has been removed) whilst allowing transition between modes whilst the controller is still powered directly by the battery.

Instead, the apparatus may comprise an electro-mechanical switch that is biased into a first state, and wherein the apparatus is configured to cause the battery to maintain the electro-mechanical switch in a second state when the battery is in the first position such that the electro-mechanical switch transitions from the second state to the first state as the battery is moved to the second position. This can be advantageous also in that with relatively little hardware the removal of the battery can be detected at a relatively late stage of battery removal whilst allowing transition between modes whilst the controller is still powered directly by the battery.

Further instead, the apparatus may comprise an electro-mechanical switch that is configured to transition from a second state to a first state as the battery is moved from the first position to the second position.

The apparatus may be configured to constrain the battery such as to allow it to be moved between the first and second positions by translation. This can assist in ensuring proper operation of the means for detecting removal of the battery whilst the controller is still powered directly by the battery.

The controller may be configured to cause the real time clock to be powered by energy stored in the energy storage device in response to transitioning from the first mode to the battery removal mode. This can provide a particularly simple and reliable arrangement, requiring no or little hardware to implement. Alternatively, the controller may be configured to cause the real time clock to be powered by energy stored in the energy storage device in response to determining the absence of sufficient voltage from the battery. This can provide less use of the energy from the energy storage device, but may require more hardware (e.g. battery voltage detection means and perhaps a fast switch). Alternatively, the real time clock may be permanently connected to the energy storage device. This can provide a particularly simple and effective arrangement.

The battery may be a coin cell type battery, but it could alternatively be of a different form factor.

The energy storage device may be a capacitor.

The controller may be a microcontroller.

The apparatus may further comprise the battery.

The invention also provides supplemental device for mating to an injection device, the supplemental device comprising apparatus as above.

A second aspect of the invention provides a method of operating apparatus comprising first and second terminals for connection to a battery; an energy storage device; and a controller, the controller being operable in a first mode in which a real time clock is active and being operable in a battery removal mode in which the real time clock is active and is powered by energy stored in the energy storage device,
the method comprising:
responding to detecting movement of a battery from a first position at which it is fully in place in the apparatus and at which both the first and second terminals are in connection with terminals of the battery to a second position at which the battery is partly removed from the apparatus but at which the first and second terminals remain in connection with the terminals of the battery, and wherein the controller is responsive to the detection that the battery has moved from the first position to the second position by transitioning from the first mode to the battery removal mode.

### Brief Description of the Drawings

Embodiments of the invention will now be described, by way of example only, with reference to the accompanying drawings, in which:
Figure 1 is a schematic view of apparatus according to various aspects of the invention;
Figure 2 is a flow chart illustrating operation of the Figure 1 apparatus; and
Figures 3 and 4 are schematic drawings illustrating alternatives to some aspects of the Figure 1 apparatus.

### Detailed Description of the Embodiments

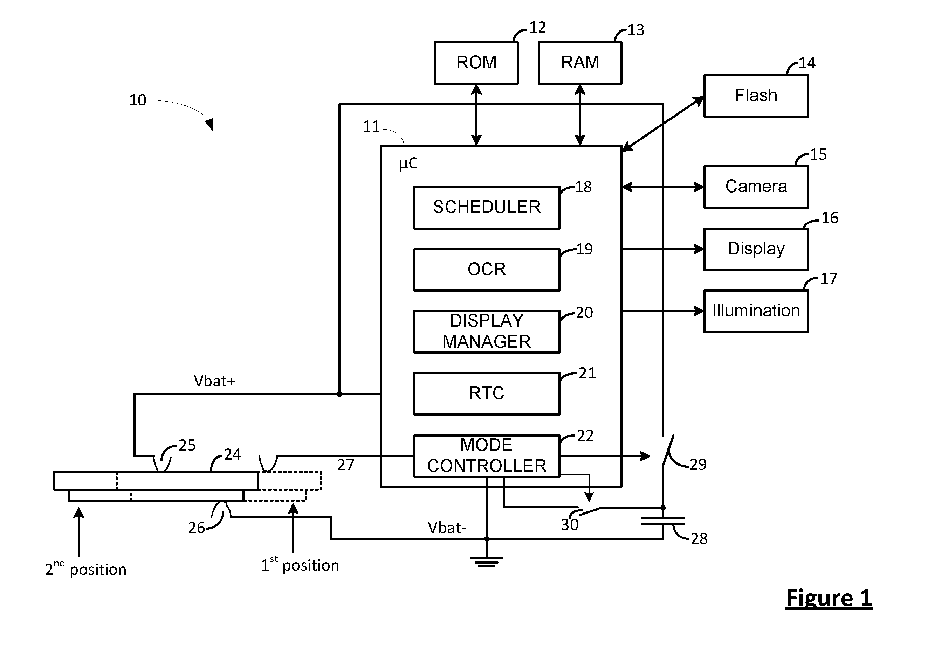

Referring firstly to Figure 1, apparatus 10 is shown in schematic form. The apparatus includes a microcontroller 11, which is connected to various other components of the apparatus 10.

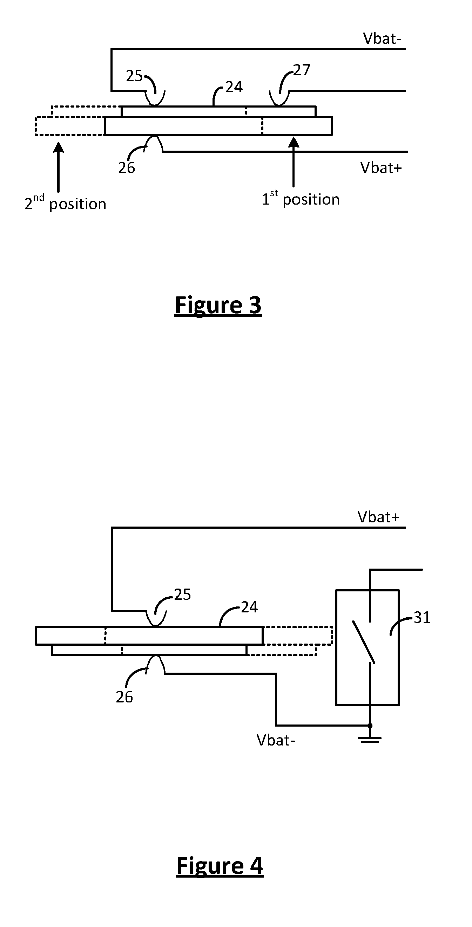

The apparatus 10 forms part of a supplementary device for attachment to a injection device. The supplementary device may be as shown and described in WO 2011/117212, the contents of which are incorporated herein by reference. Figure 4 and the corresponding description are particularly incorporated herein by reference. Briefly, the apparatus 10 mates with an injection device so as to be secured thereto. The apparatus 10 reads information presented on a part of a number sleeve that is visible in a dose window of the injection device, the information identifying a dose that is dialled into the injection device. The apparatus 10 monitors the injection device. It firstly displays information, including the dose dialled into the injection device. It also determines quantities of doses that have been delivered by a user of the injection device, and makes a record of delivered doses.

Referring back to Figure 1, a read only memory (ROM) 12 is a non-volatile memory. The ROM 12 functions to store firmware or other software. A random access memory (RAM) 13 is a volatile memory. The RAM 13 stores executable code and data during operation of the microcontroller 11. Data stored in the volatile memory 13 is lost when the memory 13 is powered down. Flash memory 14 is another non-volatile memory. Important data including dose history data is stored in the Flash memory 14, and is not lost when the Flash memory 14 powers down.

A camera 15 is coupled to the microcontroller 11. The camera 15 is controllable to capture images of the number sleeve of an injection device to which the apparatus is coupled. A display 16 is coupled to the microcontroller 11. The microcontroller 11 can cause display of information such as dose information on the display 16. An illumination module 17 is coupled to the microcontroller 11. The microcontroller 11 can cause the illumination module 17 to illuminate the number sleeve of the injection device so as to allow a good image of the number sleeve to be captured by the camera 15.

A number of modules are included within the microcontroller 11. Most of these modules are relatively high energy-consuming modules, and two modules have low power consumption.

The modules include a scheduler 18, an optical character recognition (OCR) module 19, a display manager 20, a real time clock (RTC) 21 and a mode controller 22. Except for the RTC 21 and the mode controller 22, the modules are operable when the microcontroller 11 is in a normal mode, and are not operable when the microcontroller 11 is in a standby mode. The RTC 21 and the mode controller 22 are operable in standby mode and in normal mode. A third mode of operation is discussed later in this specification.

The scheduler 18 may be implemented wholly in software, or it may be a mix of software and hardware. The scheduler 18 schedules operation of the illumination module 17 and the camera such that images of the number sleeve are captured, and are captured whilst the number sleeve is illuminated, at suitable times. For instance, the scheduler 18 may schedule operation of the illumination module 17 and the camera such that images of the number sleeve are captured at 0.2 or 0.25 second intervals.

The OCR module 19 may be implemented wholly in software, or it may be a mix of software and hardware. The OCR module 19 is configured to process images of the number sleeve captured by the camera 15 whilst the number sleeve is illuminated, in order to determine a number present on the number sleeve at the time of image capture. The OCR module 19 may process all the images provided by the camera 15, or it may process only some of them.

The display manager 20 may be implemented wholly in software, or it may be a mix of software and hardware. It may include a display driver (not shown). The display manager 20 is configured to cause display of information on the display 16 as needed. For instance, the display manager 20 may be configured to cause a delivered dose to be displayed on the display 16 for 20 seconds after a dose has been delivered.

The RTC 21 is configured to record real time. The RTC 21 includes a clock that runs continuously, and records the passing of seconds and minutes. The RTC 21 thus provides information indicative of a current date and time. The current date and time is stored within the RTC 21. The date and time may be user-settable through a user interface (not shown) provided by the apparatus 10. After a time is set, the date and time increments in real time.

The date and time provided by the RTC 21 is used to determine the date and time at which doses were delivered, thereby allowing the recordal of the timing of dose delivery in the Flash memory 14. Clock data provided by the RTC 21 is used also by the scheduler 18 to schedule operation of the camera 15 and the illumination module 17. Clock data provided by the RTC 21 is used also by the display manager 20 to determine when to start and stop displaying information. The RTC 21 is central to operation of the apparatus 10. Instead, a clock controller (not shown) in which the RTC 21 is incorporated may schedule operation of the camera 15 and the illumination module 17 and/or determine when to start and stop displaying information. This operation of the clock controller msy involve one or more oscillators that are built into the clock controller.

The mode controller 22 may be implemented wholly in software, or it may be a mix of software and hardware. The mode controller 22 is configured to switch the microcontroller 11, and thus the apparatus 10 as a whole, between normal and standby modes. The apparatus 10 is only ever in one of the normal and standby modes, it cannot be in both at the same time. The apparatus 10 is always in either the normal mode, the standby mode or a battery removal mode (described in detail below). The normal mode is entered from standby mode when the apparatus 10 is powered up, for instance when a user presses an 'on' button (not shown). The apparatus 10 transitions from normal mode to standby mode, for instance after a certain period of inactivity. Transitions between modes are controlled by the mode controller 22. The mode controller 22 can thus be considered to be a power save module.

When in the standby mode, only the RTC 21 and the mode controller 22 are active; all the other modules are inactive and powered down. In the normal mode, all modules of the microcontroller 11 are active to some extent. In the normal mode, the microcontroller 11 causes the other components (the camera 15, the display 16 and the illumination module 17) to be powered as needed. Through these features, power consumption of the apparatus 10 can be minimised whilst allowing the apparatus 10 to perform its functions of identifying dialled doses, displaying information to a user, and keeping a record of delivered doses.

A battery 24 is removably provided. The battery 24 is retained within a battery compartment (not shown), that includes mechanical features to retain the battery 24 within a housing (not shown) of the apparatus 10 when the battery 24 is installed.

First and second terminals 25, 26 of the apparatus 10 contact respective battery terminals of the battery 24. The first and second terminals 25, 26 are mechanically biased, for instance by being sprung, such that they remain in contact with the battery terminals of the battery 24 when the battery 24 is installed. The first and second terminals 25, 26 carry electrical energy from the battery terminals of the battery 24 to the microcontroller 11 on lines labelled Vbat+ and Vbat-. The microcontroller 11 uses power from the battery 24 to power the modules of the microcontroller 11 and the external components, including the camera 15, display 16 etc.

The apparatus comprises a capacitor 28, which serves as an energy storage device. The capacitor 28 serves to power the RTC 21 (and the mode controller 22) when the battery 24 is absent. The capacitor 28 is coupled to the Vbat- line on one side and to Vbat+ on the other side.

In some embodiments, the capacitor 28 is coupled to the Vbat- line on one side and to Vbat+ on the other side without any intervening switches. In these embodiments, the capacitor 28 is always connected in parallel with the battery 24. This ensures that the capacitor 28 remains charged whenever the battery 24 is installed within the apparatus 10. This ensures that the capacitor 28 remains fully-charged whenever the battery 24 is installed within the apparatus 10. This occurs both in the normal mode and in the standby mode, but not in the battery removal mode.

In other embodiments, including the one shown in Figure 1, the capacitor 28 is coupled to the Vbat- line on one side and to Vbat+ on the other side via a first switch 29. In these embodiments, the first switch 29 is controlled by the microcontroller 11 (in particular the mode controller 22) to close, thereby allowing the capacitor 28 to charge, when the capacitor 28 is not fully charged or is nearly fully charged. This ensures that the capacitor 28 remains fully- or nearly fully-charged whenever the battery 24 is installed within the apparatus 10. This occurs both in the normal mode and in the standby mode, but not in the battery removal mode.

In some embodiments, a second switch 30 is connected between the other side of the capacitor and the RTC 21. The second switch 30 is controlled to be closed, thereby providing connection of the capacitor 28 to the RTC 21, on application of a control signal by the microcontroller 11, in particular the mode controller 22, when the microcontroller enters the battery removal mode.

In other embodiments, the second switch 30 is absent. In these embodiments, the mode controller 22 is permanently connected to the positive terminal of the capacitor 28. These embodiments are simpler and involve less hardware than the embodiments in which the second switch 30 is present.

The RTC 21 may be permanently connected to the positive terminal of the capacitor 28, whether or not the second switch 30 is present. The RTC 21 may be connected to the positive terminal of the battery by a diode. Alternatively, a diode may be connected in series between the positive terminal of the battery 24 and the positive terminal of the capacitor 28, with the RTC 21 being connected to the side of the diode that contacts the capacitor 28.

Embodiments in which both the first and second switches are absent are currently preferred by the inventors. However, the embodiments in which one or both of the switches 29, 30 are present are able effectively to provide the advantages that are described below.

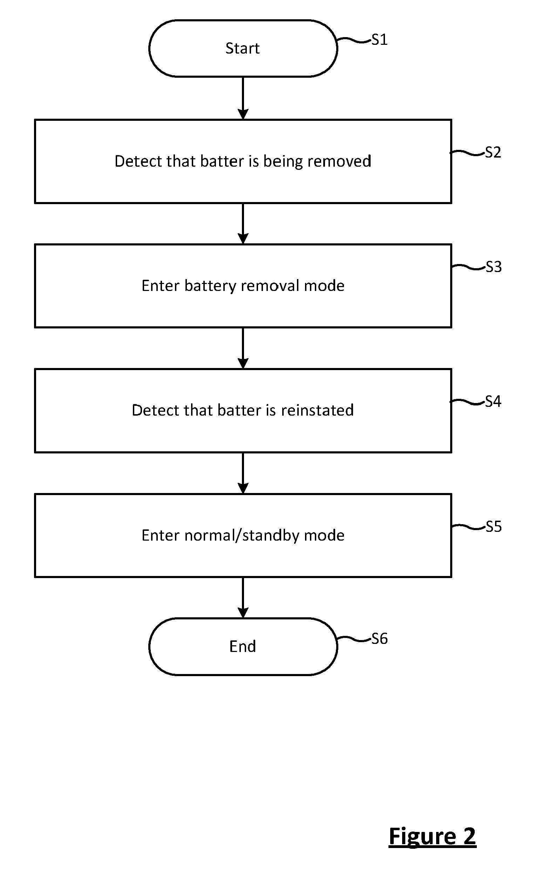

The trigger for entering the battery removal mode, as well as associated events, will now be described with reference to Figure 2.

Operation starts at step S1. Here, the apparatus 10 may be in normal mode or in standby mode.

At step S2, it is detected that the battery 24 is being removed. In particular, it is detected that battery 24 has moved from a first position at which it is fully in place in (installed in) the apparatus 10 and at which both the first and second terminals 25, 26 are in connection with terminals of the battery 24 to a second position at which the battery 24 is partly removed from the apparatus 10 but at which the first and second terminals 25, 26 remain in connection with the terminals of the battery 24. Detection is made by the mode controller 22.

In the example of Figure 1, this occurs by connection of the mode controller 22, for instance an interrupt input thereof, to a third terminal 27. The third terminal 27 is biased against the battery 24 similarly to the other terminals 25, 26. However, the third terminal 27 is located such that it ceases to contact the terminal of the battery 24 as the battery 24 moves from the first position, shown in solid lines in Figure 1, to the second position, which is shown dotted in Figure 1. In the second position, the first and second terminals 25, 26 remain in contact with the battery terminals with which they were in contact when the battery 24 was in the second position. However, in the second position, the third terminal provides a tri-state (high impedance) input to the mode controller 22, compared to the high (Vbat+) signal that was provided when the battery 24 was in the first position.

At step S3, response is made to the detection. Response is made by the mode controller 22. The response made is to place the microcontroller 11 in the battery removal mode. In the battery removal mode, the mode controller 22 ensures that the RTC 21 is powered by charge stored in the capacitor 28, such that the RTC 21 continues to function even after the battery 24 has been removed. This is achieved by the mode controller 22 causing the other modules (the modules other than the mode controller 22 and the RTC 21) to power down. The actual provision of power to the RTC 21 may not involve the mode controller 22, for instance where a diode is connected to the capacitor 28 and the RTC 21 as described above. If the microcontroller 11 was in the normal mode and the modules were powered, powering down may or may not be in a controlled way. If the microcontroller 11 was in the standby mode, the transition to battery removal mode may not involve any powering down of powered modules and components. The mode controller 22 may or may not be powered by the capacitor 28 after the battery 24 has been fully removed. As long as the time between the detection that the battery 24 is being removed and the loss of power from the battery 24 to the microcontroller 11 is sufficient to allow the mode controller 22 to power down the powered modules, the mode controller 22 may not need any power when the battery 24 is full removed.

In embodiments in which the second switch 30 is present, at step S3 the mode controller 22 also causes the second switch 30 to be closed, thereby connecting the RTC 21 to the capacitor 28.

Thus, when the microcontroller 11 is in the battery removal mode, the RTC 21 is powered by charge stored on the capacitor 28. This is the case whether or not the second switch 30 is present. When in the battery removal mode, the OCR 19, the scheduler 18 and the display manager 20 are not powered, that is they do not consume any significant levels of power. The external components, including the RAM 18, the display 16, the camera 15 etc. also are powered down, and do not consume any power, when the microcontroller 11 is in the battery removal mode. It is only the RTC 21, and optionally the mode controller 22, that consumes any power when the microcontroller 11 is in the battery removal mode. Power for the RTC 21 (and optionally the mode controller 22) comes from the capacitor 28 when the microcontroller 11 is in the battery removal mode. Power consumption in the battery removal mode is only a few microAmps, which is 2, 3 or 4 orders of magnitude less than the power consumption when in normal mode.

At step S4, it is detected that the battery 24 has been reinserted. This is performed by the mode controller 22. In the example of Figure 1, this is detected by the mode controller 22 detecting the presence of a voltage at the interrupt input that is indicative of the presence of a battery connected between the second and third terminals 26, 27. In embodiments in which the mode controller 22 is not powered when the battery 24 is removed, the mode controller 22 becomes powered when the battery 24 is reconnected and at this time detects that the battery 24 has been reinserted.

Following step S4, at step S5 a response is made. The response is made by the mode controller 22 of the microcontroller 11. The response is to transition from the battery removal mode to either the normal mode or the standby mode. The choice of mode to which to transition may be dependent on the mode of the microcontroller 11 at the time at which battery removal mode was entered. Alternatively, the apparatus 10 may be configured to transition always to normal mode or always to standby mode from battery removal mode. Transitioning from battery removal mode may be dependent on satisfactory passing of a battery voltage test, which prevents the microcontroller 11 attempting to be powered by a battery 24 that is providing an insufficient voltage.

Once the apparatus 10 has transitioned to normal mode or standby mode, recharging of the capacitor 28 occurs. If the second switch 30 is present, the microcontroller 11 opens the second switch 30, thereby ceasing to power the RTC 21 and the mode controller 22 by the capacitor 28. If the first switch 29 is present, the microcontroller 11 closes the first switch 29, thereby causing recharging of the capacitor 28. If either or both of the switches 29 and 30 are omitted, then less control is needed upon transitioning to normal mode or standby mode.

The operation ends at step S6.

Numerous advantages of the above-described apparatus and operation will be apparent, and some will now be described.

Significantly, the RTC 21 is powered even whilst the battery 24 is absent. Moreover, it can be powered by a relatively low value capacitor 28. A low value for the capacitor 28 is sufficient because it is only the RTC 21 (and optionally the mode controller 22) that are needed to be powered when the battery is removed and the apparatus 10 is in the battery removal mode. To advantage, the value of the capacitor 28 is chosen such as to power the RTC 21 (and optionally the mode controller 21) for some tens of seconds, for instance 30 seconds or 60 seconds, such as to be sufficient to allow the RTC 21 to retain time whilst no battery 24 is installed.

By allowing a low value capacitor 28 to be used, costs can be reduced.

The capacitor 28 may for instance be formed as part of the integrated circuit that constitutes the microcontroller 11. It may alternatively be a discrete component, for instance installed on a main circuit board (not shown). An alternative component may instead be used for energy storage.

Alternative schemes for detecting that the battery is being removed, and for triggering entry of the apparatus 10 into the battery removal mode, will now be described with reference to Figures 3 and 4. Features of Figure 1 that are the same are not shown, but are present in these other embodiments.

Figure 3 is very similar to Figure 1, although the first terminal 25 and the third terminal 27 contact the negative terminal of the battery 24, and the second terminal 26 contacts the positive terminal of the battery 24. Operation of the microcontroller 11 is substantially the same in this embodiment, although the interrupt input is configured to respond to a change in signal from low signal level (Vbat-) to tri-state or high impedance, whereas with the Figure 1 arrangement the interrupt input is responsive to a change from high signal level (Vbat+) to tri-state or high impedance.

In Figure 4, the third terminal 27 is omitted and an electromechanical switch 31 is included instead. One terminal of the switch 31 is coupled to a battery terminal (here, Vbat- , although in other embodiments including a currently preferred embodiment it is instead Vbat+) and the other is connected to the mode controller 22 of the microcontroller 11. The electro-mechanical switch 31 is biased into a first state in which the switch is open. The apparatus 10 is configured to cause the battery 24 to maintain the electro-mechanical switch 31 in a second, closed state when the battery 24 is in the first position such that the electro-mechanical switch 31 transitions from the second state to the first state as the battery 24 is moved to the second position. The switch 31 may alternatively be biased into the closed state and move from open to closed as the battery 24 moves from the first position to the second position.

In all of the above embodiments, the battery 24 is a coin cell type battery. Such batteries are characterised by being relatively thin and having terminals on opposite faces. The terminals have generally planar surfaces and areas that are proportionately large compared to the overall size of the battery 24. Coin cell batteries are generally accommodated in devices by the provision of a shallow well in which the battery is located before a lid or other cover is placed over the well, thereby restraining the battery. Terminals in the well and on the cover then allow electrical power to be taken from the battery. In the embodiments described above, on the contrary, the battery 24 is a coin cell battery that is translated into place along an axis that is parallel with the faces of the terminals of the battery. This assists in allowing the first and second terminals 25, 26 to remain in contact with the terminals of the battery 24 whilst the battery is being removed, such that removal can be detected with the terminals 25, 26 remaining in contact with the battery terminals such as to remove power from the battery 24. The battery compartment of the apparatus 10 may include any suitable mechanical arrangement for allowing the battery 24 to be translated from outside the apparatus to the first position along an axis parallel to the faces of the terminals of the battery.

The above-described embodiments are not limiting on the invention, which is defined solely by the appended claims. Numerous alternatives will be envisaged by the skilled person, and all such alternatives rate within the scope of the invention unless excluded by the claims. Some alternatives will now be described.

Instead of a microcontroller 11, the RTC 21 and the mode controller 22 may be included as part of a device such as a processor, or they may be implemented in different components of a system comprising multiple inter-connected components. In general, any suitable controller may be used in place of the microcontroller 11. Any of the memories 12, 13 and 14 may be provided as part of the microcontroller 11, or some or all of them may be separate devices.

In the above, third terminals 27 and a switch 31 are provided as examples of battery removal detection components. The terminals utilise electrical detection of removal of the battery, and the switch uses mechanical detection. Other components may be suitable, including optical sensors, proximity sensors, magnetic sensors etc.

In some of the embodiments described above, the mode controller 22 switches the second switch 30 to cause the RTC 21 and the mode controller 22 to be powered by the capacitor 28 when transitioning to the battery removal mode. Alternatively, a circuit may be provided whereby power from the battery 24 is provided to power the RTC 21 and the mode controller 22 until the battery voltage falls below a threshold, at which time the circuit switches to use power from the capacitor 28. The circuit may be a comparator-based circuit, or it may be a diode-based circuit, for instance. An advantage of these arrangements is that the capacitor 28 is used to power the RTC 21 and the mode controller 22 for less time during a battery replacement operation.

In the above, the mode controller 22 is powered when the microcontroller 11 is in the battery removal mode. In other embodiments, the mode controller 22 is not powered when the microcontroller 11 is in the battery removal mode. Here, it may be that only the RTC 21 is powered when the microcontroller 11 is in the battery removal mode. In these embodiments, detection of the presence of a battery at step S4 of Figure 2 may be performed as part of the process of the microcontroller 11 booting up on receiving power after having been powered down, although in this particular case the RTC 21 has remained active whilst the remainder of the microcontroller 11 was powered down.

## Claims

1. Apparatus comprising:
first and second terminals for connection to a battery;
an energy storage device; and
a controller, the controller being operable in a first mode in which a real time clock is active and being operable in a battery removal mode in which the real time clock is active and is powered by energy stored in the energy storage device
wherein the apparatus is configured to detect movement of a battery from a first position at which it is fully in place in the apparatus and at which both the first and second terminals are in connection with terminals of the battery to a second position at which the battery is partly removed from the apparatus but at which the first and second terminals remain in connection with the terminals of the battery, and wherein the controller is responsive to the detection that the battery has moved from the first position to the second position by transitioning from the first mode to the battery removal mode.

2. Apparatus as claimed in claim 1, wherein in the first mode at least one energy consuming function and the real time clock are active and wherein in the battery removal mode the real time clock is active and is powered by energy stored in the energy storage device and the at least one energy consuming function is inactive.

3. Apparatus as claimed in claim 1 or claim 2, wherein the apparatus comprises a third terminal for connection to a terminal of the battery, and wherein the apparatus is configured such that the third terminal ceases to contact the terminal of the battery prior to the first and second terminals ceasing to contact the battery as the battery is moved from the first position to be removed from the apparatus.

4. Apparatus as claimed in claim 3, wherein the apparatus is configured to cause the third terminal to be connected to a positive terminal of the battery when the battery is in the first position.

5. Apparatus as claimed in claim 3, wherein the apparatus is configured to cause the third terminal to be connected to a negative terminal of the battery when the battery is in the first position.

6. Apparatus as claimed in claim 1 or claim 2, wherein the apparatus comprises an electro-mechanical switch that is biased into a first state, and wherein the apparatus is configured to cause the battery to maintain the electro-mechanical switch in a second state when the battery is in the first position such that the electro-mechanical switch transitions from the second state to the first state as the battery is moved to the second position.

7. Apparatus as claimed in claim 1 or claim 2, wherein the apparatus comprises an electro-mechanical switch that is configured to transition from a second state to a first state as the battery is moved from the first position to the second position.

8. Apparatus as claimed in any preceding claim, wherein the apparatus is configured to constrain the battery such as to allow it to be moved between the first and second positions by translation.

9. Apparatus as claimed in any preceding claim, wherein the controller is configured to cause the real time clock to be powered by energy stored in the energy storage device in response to transitioning from the first mode to the battery removal mode.

10. Apparatus as claimed in any of claims 1 to 8, wherein the controller is configured to cause the real time clock to be powered by energy stored in the energy storage device in response to determining the absence of sufficient voltage from the battery.

11. Apparatus as claimed in any preceding claim, wherein the battery is a coin cell type battery.

12. Apparatus as claimed in any preceding claim, wherein the energy storage device is a capacitor.

13. Apparatus as claimed in any preceding claim, wherein the controller is a microcontroller.

14. A supplemental device for mating to an injection device, the supplemental device comprising apparatus as claimed in any preceding claim.

15. A method of operating apparatus comprising first and second terminals for connection to a battery; an energy storage device; and a controller, the controller being operable in a first mode in which a real time clock is active and being operable in a battery removal mode in which the real time clock is active and is powered by energy stored in the energy storage device,
the method comprising:
responding to detecting movement of a battery from a first position at which it is fully in place in the apparatus and at which both the first and second terminals are in connection with terminals of the battery to a second position at which the battery is partly removed from the apparatus but at which the first and second terminals remain in connection with the terminals of the battery, and wherein the controller is responsive to the detection that the battery has moved from the first position to the second position by transitioning from the first mode to the battery removal mode.
